# EUROPÄISCHE PATENTSCHRIFT

(11) **EP 1 169 580 B1**
(45) Veröffentlichungstag und Bekanntmachung des Hinweises auf die Patenterteilung: **29.03.2006**
(21) Anmeldenummer: 01903645.8
(22) Anmeldetag: 13.01.2001
(51) Int. Cl.: F16D 65/16, B60T 8/42

(54) **SCHWINGUNGSDÄMPFER FÜR EINE HYDRAULISCHE FAHRZEUG-BREMSANLAGE**
VIBRATION DAMPER FOR A HYDRAULIC BRAKE SYSTEM OF A VEHICLE
AMORTISSEUR DE VIBRATIONS POUR UN SYSTEME DE FREINAGE HYDRAULIQUE DE VEHICULE

(30) Priorität: 09.02.2000 DE 10005588
(43) Veröffentlichungstag der Anmeldung: 09.01.2002
(73) Patentinhaber: Bayerische Motoren Werke Aktiengesellschaft, 80809 München (DE)
(72) Erfinder: NAGY, Imre, 85386 Eching (DE); MAIER, Ernst, 85570 Markt Schwaben (DE)
(86) Internationale Anmeldenummer: PCT/EP2001/000371
(87) Internationale Veröffentlichungsnummer: WO 2001/059319

(56) Entgegenhaltungen:
- DE-A- 3 821 726
- DE-A- 4 418 701
- US-A- 5 205 309
- US-A- 5 540 486

## Beschreibung

Die Erfindung betrifft einen Schwingungsdämpfer für eine hydraulische Fahrzeug-Bremsanlage mit einer dem die Bremskraft übertragenden Hydraulikmedium zugewandten Membrane, die mit ihrem Randbereich derart an einem Trägerkörper befestigt ist, daß sie sich mit ihrem Zentrumsbereich zumindest geringfügig zum Trägerkörper hin oder von diesem weg bewegen kann. Zum bekannten Stand der Technik wird auf die DE 195 44 223 A1 verwiesen.

Es kann erforderlich sein, in einer hydraulischen Bremsanlage einen Schwingungsdämpfer nach dem Oberbegriff des Anspruchs 1 vorzusehen, um hiermit unerwünschte Schwingungen im Hydrauliksystem zu vermindern, bzw. zu verhindern, daß sich kleine, durch irgendwelche Störkräfte angefachte Schwingungen zu einer nicht mehr tolerierbaren Intensität aufschaukeln. Dabei kann ein derartiger Schwingungsdämpfer auch als "Druckglätter" bezeichnet werden. Hierfür können bspw. federbelastete Schwingungsdämpfer zum Einsatz kommen, die jedoch relativ aufwendig sind. Wesentlich einfacher ist ein aus der o.g. Schrift bekannter Schwingungsdämpfer, der ein Gehäuse oder einen Trägerkörper mit einer konkav ausgebildeten Ausnehmung aufweist, weiche durch eine scheibenförmige Membrane aus Federblech abgeschlossen ist. Diese außenseitig vom Hydraulikmedium der Bremsanlage beaufschlagte Membrane ist randseitig mit dem Trägerkörper verschweißt und der zwischen der Membrane und der genannten Ausnehmung gelegene Hohlraum ist mit Luft gefüllt. Entstehende Druckschwingungen im Hydrauliksystem veranlassen die Membrane, sich mit ihrem Zentrumsbereich in den Hohlraum hinein und wieder vom Trägerkörper wegzubewegen, wodurch bei geeigneter Auslegung eine Schwingungsdämpfung erzielt werden kann.

Es hat sich gezeigt, daß insbesondere dann, wenn die Membrane relativ dünn und somit schwach ausgebildet ist, diese ungüstigstenfalls reißen kann, so daß die Luft aus dem Hohlraum zwischen Membrane und Trägerkörper in das Hydrauliksystem gelangen kann. Lufteinschlüsse im Hydrauliksystem einer hydraulischen Fahrzeug-Bremsanlage sind aber bekanntermaßen äußerst unerwünscht, da sich hierdurch eine weiche Bremsbetätigung, hervorgerufen durch die Kompression der eingeschlossenen Luft, einstellt.

Eine Abhilfemaßnahme für diese geschilderte Problematik aufzuzeigen, ist Aufgabe der vorliegenden Erfindung.
Die Lösung dieser Aufgabe ist dadurch gekennzeichnet, daß der für die Membran-Bewegung erforderliche Hohlraum zwischen der Membrane und dem Trägerkörper weitestgehend evakuiert ist. Vorteilhafte Aus- und Weiterbildungen sind Inhalt der Unteransprüche.

Erfindungsgemäß befindet sich im genannten Hohlraum zwischen der Membrane und dem Trägerkörper im wesentlichen Vakuum, so daß bei einer zwar unerwünschten, jedoch nicht hundertprozentig auszuschließenden Zerstörung der Membrane keine Luft in das Hydrauliksystem gelangen kann. Selbstverständlich ist nach einer Membran-Zerstörung der Schwingungsdämpfer nicht mehr funktionsfähig, jedoch wird zumindest die Bremsanlage nicht in ihrer Funktion beeinträchtigt. Die bei einer zerstörten Membrane nicht mehr dämpfbaren Schwingungen führen nämlich lediglich zu einer Komforteinbuße, da diese Schwingungen ungüstigstenfalls in das Fahrwerk des Fahrzeuges, bspw. Personenkraftwagens, übertragen werden können.

Es hat sich gezeigt, daß eine Schwingungsdämpfung im Hydrauliksystem einer Kraftfahrzeug-Bremsanlage insbesondere dann erforderlich werden kann, wenn im Hydraulikmedium keine allzu hohen Bremsdrücke, nämlich bspw. in der Größenordnung von 5 bar bis 20 bar, vorliegen. Um hier eine wirksame Dämpfung zu erzielen, sollte die Membrane an sich relativ dünn und flexibel ausgebildet sein. Auch unter diesem Aspekt ist das auf der dem Hydraulikmedium abgewandten Seite der Membrane anliegende Vakuum vorteilhaft, da somit der Schwingungsdämpfer bereits ab einem Absolutdruck von 1 bar wirksam werden kann. Um dabei zu verhindern, daß die Membrane durch höhere Bremsdrücke - diese können bis in die Größenordnung von 200 bar steigen - zerstört wird, können die relevanten Abmessungen des Schwingungsdämpfers derart ausgelegt und die Steifigkeit der Membrane derart gewählt sein, daß die Membrane bei einem Druck des Hydraulikmediums in der Größenordnung von 25 bar und mehr vollflächig an der zugewandten Oberfläche des Trägerkörpers anliegt.

Die hinsichtlich des gewünschten Effektes, nämlich der Schwingungsdämpfung wirksame Oberfläche kann bspw. bei vorgegebenen Abmessungen des Trägerkörpers vergrößert und somit die Dämpfungswirkung gesteigert werden, wenn die Membrane bereichsweise gewellt bzw. wellenförmig ausgebildet ist. Um auch bei einer derartigen Membran-Gestaltung eine Zerstörung derselben, hervorgerufen durch hohe Hydraulikdrücke, zu verhindern, kann die in diesem Bereich der Membrane zugewandte Oberfläche des Trägerkörpers im Querschnitt ebenso, d.h. quasi synchron hierzu gestaltet sein. Ebenfalls aus Festigkeitsgründen kann es insbesondere bei einer derartigen Membrangestaltung empfehlenswert sein, die geometrischen Abmessungen derart zu wählen, daß der Abstand zwischen der nicht mit Hydraulikdruck beaufschlagten Membrane und der ihr zugewandten Oberfläche des Trägerkörpers im Randbereich der Membrane abseits des Befestigungsabschnittes (mit welchem sie am Trägerkörper befestigt ist) geringer ist als im Membranen-Zentralbereich.

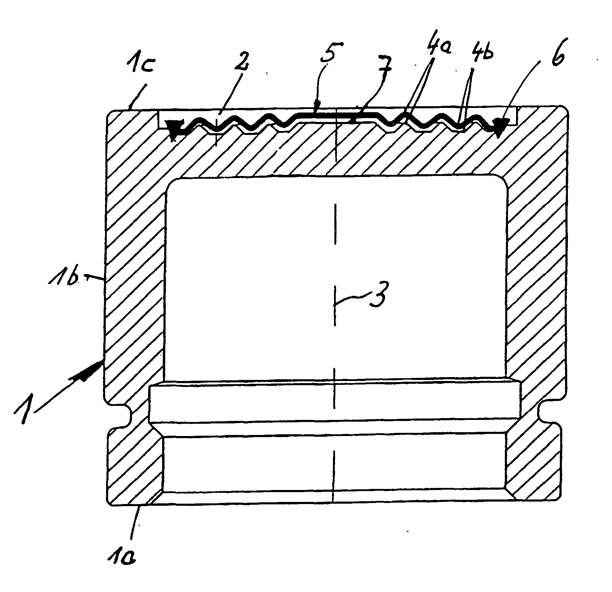

Im Sinne einer vorteilhaften Funktionsvereinigung kann es sich beim Trägerkörper um den im Bremssattel einer Fahrzeugbremse vorgesehenen Bremskolben handeln, an dessen dem Hydraulikmedium abgewandten Seite ein Bremsbelag-Träger anliegt. Ein derartiger Schwingungsdämpfer für eine hydraulische Fahrzeug-Bremsanlage ist als bevorzugtes Ausführungsbeispiel der Erfindung in der beigefügten einzigen Figur im Schnitt dargestellt und wird im weiteren kurz beschrieben.

Mit der Bezugsziffer 1 ist der sog. Trägerkörper des Schwingungsdämpfers bezeichnet, der hier gleichzeitig der im Bremssattel einer ansonsten üblichen Kraftfahrzeug-Bremsanlage vorgesehene Bremskolben ist. An der (in der Figur unteren) Stirnseite 1a dieses zylindrischen Bremskolbens 1 bzw. Trägerkörpers 1, der mit seiner Zylinder-Mantelfläche 1b in einem nicht dargestellten Zylinder verschiebbar geführt ist, liegt wie üblich ein (figürlich nicht dargestellter) Bremsbelag-Träger an. Die der (hier unteren) Stirnseite 1a gegenüberliegende (hier obere) Stirnseite 1c wird wie üblich vom die Bremskraft übertragenden Hydraulikmedium beaufschlagt.

In der Stirnseite 1c ist eine kreisförmige Vertiefung 2 im Trägerkörper 1 vorgesehen, die zumindest geringfügig konkav ausgebildet ist, d.h. die Vertiefung 2 ist im Bereich der Zentralachse 3 des Trägerkörpers 1 tiefer bzw. weiter gegenüber der Stirnseite 1 c des Trägerkörpers 1 hinein versetzt, als in deren Randbereich. Ferner ist - wie ersichtlich - die Oberfläche des Trägerkörpers 1 innerhalb dieser Vertiefung 2 bereichsweise wellenförmig ausgebildet. Da es sich - wie bereits erwähnt - um eine kreisförmige Vertiefung 2 im zylindrischen Trägerkörper 1 handelt, beschreiben die Wettenspitzen 4a bzw. die Wellentäler 4b dieser wellenförmigen Oberfläche selbstverständlich ebenfalls Kreise. (Im übrigen kann bei einem durch Fließpressen hergestellten Trägerkörper 1 diese Kontur bei Herstellungsprozess mit eingeprägt werden).
Vorgesehen ist eine ebenfalls im wesentlichen kreisförmige Membrane 5, die in ihrem Randbereich derart am Trägerkörper 1 bzw. an dessen Stirnseite 1c im Bereich der Vertiefung 2 befestigt ist, daß sich diese Membrane 5 mit ihrem im Bereich der Zentralachse 3 liegenden Zentrumsbereich zumindest geringfügig zum Trägerkörper 1, d.h. zu dessen Stirnseite 1c hin oder von diesem/dieser weg bewegen kann. Bevorzugt ist die Membrane 5 in ihrem Randbereich am Trägerkörper 1 mittels einer durch Elektronenstrahlschweißen erzeugten Schweißnaht 6 befestigt.

Wirken auf die freie, von außen zugängliche, d.h. dem Hydraulikmedium des Hydrauliksystemes der Bremsanlage zugewandte Oberfläche der Membrane 5 keine bzw. im wesentlichen keine Kräfte ein, so ist die Membrane 5 abseits ihres Befestigungsbereiches bzw. Befestigungsabschinttes, d.h. abseits der Schweißnaht 6 von der Oberfläche des Trägerkörpers 1 beabstandet. Zwischen der Membrane 5 und dem Trägerkörper 1 befindet sich somit ein Hohlraum 7, der weitestgehend evakuiert ist, d.h. in diesem Hohlraum 7 herrscht im wesentlichen Vakuum.

Der Wellenform der Oberfläche des Trägerkörpers 1 im Bereich der Vertiefung 2 angepaßt ist auch der in diesem wellenförmigen Abschnitt liegende Bereich oder Abschnitt der Membrane 5 wellenförmig ausgebildet. Die im Querschnitt der Membrane 5 gut ersichtliche Wellenform ist dabei parallel zu derjenigen der Oberfläche des Trägerkörpers 1, d.h. diese beiden Bauteile sind quasi synchron zueinander wellenförmig oder gewellt ausgebildet, derart, daß die Wellentäler 4b sowie die Wellenspitzen 4a jeweils übereinander zum Liegen kommen.

Was die Abmessung des evakuierten Hohlraumes 7 betrifft, die im wesentlichen durch die Konkavität der Oberfläche des Trägerkörpers 1 im Bereich der Vertiefung 2 bestimmt ist, so ist der (in der Figurendarstellung in Vertikalrichtung gemessene) Abstand zwischen der nicht mit Hydraulikdruck beaufschlagten Membrane 5 und der ihr zugewandten Oberfläche des Trägerkörpers 1 im Randbereich der Membrane 5 abseits von deren Befestigungsabschnittes (d.h. abseits der Schweißnaht 6) geringer ist als im Zentralbereich der Membrane 5, d.h. in der Umgebung der Zentralachse 3.

Schwingungen im auf die Stirnseite 1c des Trägerkörpers 1 und somit auch auf die Membrane 5 einwirkenden Hydrauliksystem der Fahrzeug-Bremsanlage können nun mit dem durch diese Membrane 5 und den dahinterliegenden evakuierten Hohlraum 7 gebildeten Schwingungsdämpfer solange erfolgreich gedämpft werden, bis diese Membrane 5 unter Einwirkung des Hydraulikdruckes kontinuierlich gegen die Oberfläche des Trägerkörpers gedrückt wird. Ist der Hydraulikdruck jedoch geringer als dieser Wert, so werden Druckschwingungen im Hydrauliksystem die Membrane 5 zumindest in ihrem Zentrumsbereich in Schwingung zu versetzen trachten, d.h. zeitlich betrachtet die Membrane 5 abwechselnd zur Trägerkörper-Oberfläche hin und von dieser weg bewegen. Bei geeigneter Abstimmung der relevanten Dimensionen kann hieraus eine wirkungsvolle Schwingungsdämpfung resultieren. So kann bspw. die Dicke der bspw. aus Nickelstahl oder NiBe bestehenden Membrane 5 in der Größenordnung von 0,4 mm bis 0,7 mm liegen. Vorteilhafterweise spricht ein derartiger Schwingungsdämpfer nur in dem tatsächlich benötigten Wertebereich des im Hydrauliksystem herrschenden (variablen) Druckes an, so bspw. im Bereich von ca. 2 bar bis ca. 20 bar. Bei höheren Hydraulikdrücken liegt die Membrane 5 vollflächig auf dem Trägerkörper 1 auf, so daß keine Beeinflussung des Bremsverhaltens des Gesamtsystemes zu befürchten ist. Bei einer Zerstörung der Membrane 5 kann vorteilhafterweise keine Luft in das Hydrauliksystem gelangen, wobei noch darauf hingewiesen sei, daß durchaus eine Vielzahl von Details abweichend vom gezeigten Ausführungsbeispiel gestaltet sein kann, ohne den Inhalt der Patentansprüche zu verlassen.

## Patentansprüche

1. Schwingungsdämpfer für eine hydraulische Fahrzeug-Bremsanlage mit einer dem die Bremskraft übertragenden Hydraulikmedium zugewandten Membrane (5), die mit ihrem Randbereich derart an einem Trägerkörper (1) befestigt ist, daß sie sich mit ihrem Zentrumsbereich zumindest geringfügig zum Trägerkörper hin oder von diesem weg bewegen kann,
**dadurch gekennzeichnet, daß** der für die Membran-Bewegung erfoderliche Hohlraum (7) zwischen der Membrane (5) und dem Trägerkörper (1) weitestgehend evakuiert ist.

2. Schwingungsdämpfer nach Anspruch 1,
**dadurch gekennzeichnet, daß** die Steifigkeit der Membrane (5) derart gewählt ist, daß die Membrane bei einem Druck des Hydraulikmediums in der Größenordnung von 25 bar und mehr vollflächig an der zugewandten Oberfläche des Trägerkörpers (1) anliegt.

3. Schwingungsdämpfer nach Anspruch 1 oder 2,
**dadurch gekennzeichnet, daß** die Membrane (5) bereichsweise sowie in diesem Bereich die der Membrane zugewandte Oberfläche des Trägerkörpers (1) im Querschnitt wellenförmig ausgebildet ist.

4. Schwingungsdämpfer nach einem der vorangegangenen Ansprüche,
**dadurch gekennzeichnet, daß** der Abstand zwischen der nicht mit Hydraulikdruck beaufschlagten Membrane (5) und der ihr zugewandten Oberfläche des Trägerkörpers (5) im Randbereich der Membrane abseits des Befestigungsabschnittes geringer ist als im Membranen-Zentralbereich.

5. Schwingungsdämpfer nach einem der vorangegangenen Ansprüche,
**dadurch gekennzeichnet, daß** der Trägerkörper (1) der im Bremssattel einer Fahrzeugbremse vorgesehene Bremskolben ist, an dessen dem Hydraulikmedium abgewandten Seite (1a) ein Bremsbelag-Träger anliegt.

## Claims

1. A vibration damper for a hydraulic vehicle brake system comprising a diaphragm (5) which faces the hydraulic medium that transmits the brake force and is fastened to a carrier element (1) by its edge region in such a way that it is able to move toward the carrier element or away from it at least slightly with its centre region, **characterised in that** the cavity (7) required for the diaphragm movement between the diaphragm (5) and the carrier element (1) is substantially evacuated.

2. A vibration damper according to claim 1, **characterised in that** the rigidity of the diaphragm (5) is selected such that the diaphragm rests completely on the facing surface of the carrier element (1) in the event of a pressure of the hydraulic medium in the order of magnitude of 25 bar and above.

3. A vibration damper according to claim 1 or 2, **characterised in that**, in regions, the diaphragm (5), as well as, in this region, the surface of the carrier element (1) facing the diaphragm, are undulating in cross-section.

4. A vibration damper according to any one of the preceding claims, **characterised in that** the spacing between the diaphragm (5), which is not acted upon by hydraulic pressure, and the surface of the carrier element (5) facing it, in the edge region of the diaphragm remote from the fastening section is smaller than in the diaphragm centre region.

5. A vibration damper according to any one of the preceding claims, **characterised in that** the carrier element (1) is the brake piston provided in the brake calliper of a vehicle brake, on the side (1a) of which remote from the hydraulic medium, a brake lining carrier rests.

## Revendications

1. Amortisseur de vibrations pour un système de freinage hydraulique de véhicule, comprenant une membrane (5) tournée vers le fluide hydraulique transmettant la force de freinage et fixée en bordure à un corps de support (1) de sorte qu'elle soit au moins légèrement mobile dans sa zone centrale vers le corps de support ou en s'éloignant de celui-ci,
**caractérisé en ce que**
l'espace creux (7) nécessaire au mouvement de la membrane et situé entre la membrane (5) et le corps de support (1), est pour l'essentiel évacué.

2. Amortisseur de vibrations selon la revendication 1,
**caractérisé en ce que**
la rigidité de la membrane (5) est choisie de telle sorte que la membrane, lors d'une pression du fluide hydraulique de l'ordre de 25 bars ou plus, repose de toute sa surface contre celle du corps de support (1) tournée vers elle.

3. Amortisseur de vibrations selon la revendication 1 ou 2,
**caractérisé en ce que**
certaines zones de la membrane (5) ainsi que certaines zones de la surface tournée vers la membrane du corps de support (1), sont ondulées en coupe transversale.

4. Amortisseur de vibrations selon l'une quelconque des revendications précédentes,
**caractérisé en ce que**
la distance entre la membrane (5) non sollicitée par une pression hydraulique et la surface tournée vers elle du corps de support (1) est plus petite en bordure de la membrane à l'écart de la section de fixation que dans sa zone centrale.

5. Amortisseur de vibrations selon l'une quelconque des revendications précédentes,
**caractérisé en ce que**
le corps de support (1) est le piston de frein prévu dans l'étrier d'un frein de véhicule, dont le côté (1a) opposé au fluide hydraulique porte un support de plaquette de frein.
